(19) Europäisches Patentamt / European Patent Office / Office européen des brevets

(11) **EP 3 499 181 A1**

(12) **DEMANDE DE BREVET EUROPEEN**

(43) Date de publication:
**19.06.2019 Bulletin 2019/25**

(21) Numéro de dépôt: **17207949.3**

(22) Date de dépôt: **18.12.2017**

(51) Int Cl.:
**G01B 21/16** (2006.01)  **G01M 13/02** (2019.01)
**F16G 13/00** (2006.01)  **G01B 5/16** (2006.01)
**G01B 7/04** (2006.01)  **G01B 11/14** (2006.01)

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**MA MD TN**

(71) Demandeur: **Momentum**
**33000 Bordeaux (FR)**

(72) Inventeur: **GAUTIER, Fabrice**
**33000 BORDEAUX (FR)**

(74) Mandataire: **Ipside**
**7-9 Allées Haussmann**
**33300 Bordeaux Cedex (FR)**

(54) **PROCÉDÉ POUR LA DÉTERMINATION DE L ALLONGEMENT D'UNE CHAÎNE DE TRANSMISSION MÉCANIQUE À L AIDE D'UN SEUL CAPTEUR ET DISPOSITIF IMPLÉMENTANT UN TEL PROCÉDÉ**

(57)    L'invention concerne un procédé (10) pour la détermination d'un allongement d'une chaîne de transmission mécanique comportant un brin tendu contrôlé par un capteur à partir duquel est généré un signal numérique, ledit procédé étant caractérisé en ce qu'il comporte :
- une étape d'apprentissage (100) au cours de laquelle est déterminé un nombre moyen initial d'échantillons du signal numérique générés à partir du capteur au passage d'un élément de référence du brin tendu devant ledit capteur ;
- une étape ultérieure de surveillance (110) au cours de laquelle est déterminé un nombre moyen courant d'échantillons du signal numérique générés au passage d'un élément de référence du brin tendu devant ledit capteur, puis comparé au nombre moyen initial déterminé lors de l'étape d'apprentissage (100) afin d'en déduire un pourcentage d'allongement de la chaîne de transmission ;
une vitesse de défilement de la chaîne, non nécessairement connue, étant identique aux étapes d'apprentissage (100) et de surveillance (110).

FIG. 2

EP 3 499 181 A1

**Description**

**DOMAINE DE L'INVENTION**

La présente invention appartient au domaine de la mécanique industrielle.

Plus particulièrement, la présente invention concerne un dispositif pour la mesure d'une variation de longueur d'un élément de transmission de mouvement pendant son utilisation.

**ETAT DE L'ART**

L'une des conséquences de l'usure d'une chaîne de transmission mécanique est l'allongement des mailles la constituant. Cet allongement peut par exemple être dû aux frottements mécaniques et à l'augmentation locale de température qui en résulte. Au-delà d'une tolérance d'allongement, généralement de l'ordre de 3%, les mailles de la chaîne s'engrènent mal avec les dents des pignons entraînant la chaîne, provoquant une usure des dents des pignons et des risques de déraillement importants ; et la chaîne doit être changée.

Afin de surveiller l'allongement d'une chaîne de transmission, il est connu des surveiller une distance entre deux points de la chaîne. Le brevet américain US 9 772 179 décrit un dispositif de surveillance de l'usure d'une chaîne par mesure de l'allongement de la chaîne. Pour réaliser cette mesure d'allongement, une vitesse de la chaîne est mesurée à l'aide de deux capteurs en mesurant le temps de trajet d'un premier point de mesure de la chaîne entre un capteur amont et un capteur aval. Cette vitesse étant calculée, la distance entre le premier point de mesure et un second point de mesure de la chaîne est ensuite calculée après mesure de l'intervalle temporel entre l'instant où le premier point passe au niveau du capteur aval et l'instant où le second point passe au niveau du capteur amont. Cette distance est ensuite comparée à une distance de référence entre les deux points lorsque la chaîne était neuve. Dans le cadre de cette solution, la distance entre les capteurs est connue et inférieure à une distance entre les points de mesure.

La demande de brevet britannique GB 2 377 918 décrit une solution analogue dans laquelle les points de mesure sont identifiés par des marqueurs.

Un inconvénient de ces solutions est qu'elles présentent des contraintes quant au positionnement des capteurs et au choix des points de mesure. Elles nécessitent par ailleurs de calculer la vitesse d'entraînement de la chaîne.

Le brevet américain US 5 563 392 décrit un dispositif pour la mesure de l'allongement d'une chaîne, au moyen de deux capteurs photoélectriques. Chaque capteur identifie la présence ou l'absence d'un type de lien de la chaîne se répétant périodiquement tout au long de la chaîne, de sorte que chaque capteur génère un signal sensiblement périodique. Préférentiellement, les capteurs sont placés de telle sorte que les signaux générés par les deux capteurs sont en phase. Lors de l'allongement de la chaîne, un déphasage apparaît entre les deux signaux, la valeur du déphasage permettant de quantifier le degré d'allongement de la chaîne.

Un inconvénient de cette solution est que la détermination de l'allongement par mesure du déphasage présente une sensibilité relativement faible, inversement proportionnelle à la vitesse de la chaîne de transmission, la sensibilité étant définie comme un rapport à la grandeur d'intérêt de la grandeur mesurée/déterminée pour parvenir à ladite grandeur d'intérêt.

**EXPOSE DE L'INVENTION**

L'invention vise à pallier aux inconvénients de l'art antérieur.

L'invention concerne un procédé pour la détermination d'un allongement d'une chaîne de transmission mécanique comportant un brin tendu contrôlé par un capteur à partir duquel est généré un signal numérique $X_n$, $X'_n$, ledit procédé étant caractérisé en ce qu'il comporte :

- une étape d'apprentissage au cours de laquelle est déterminé un nombre moyen initial $<N>$ d'échantillons du signal numérique $X_n$ générés à partir du capteur au passage d'un élément de référence du brin tendu devant ledit capteur ;
- une étape ultérieure de surveillance au cours de laquelle est déterminé un nombre moyen courant $<N'>$ d'échantillons du signal numérique $X'_n$ générés au passage d'un élément de référence du brin tendu devant ledit capteur, puis comparé au nombre moyen initial $<N>$ déterminé lors de l'étape d'apprentissage afin d'en déduire un pourcentage d'allongement $\Delta L\%$ de la chaîne de transmission ;

une vitesse de défilement de la chaîne de transmission mécanique devant le capteur étant identique aux étapes d'apprentissage et de surveillance.

Dans un mode de mise en oeuvre du procédé :

- au cours de l'étape d'apprentissage, le signal numérique $X_n$ est écrêté à une valeur seuil $X_s$ pour former un signal numérique saturé $X_n$ et le nombre moyen initial $<N>$ d'échantillons par élément de référence est déterminé sur la base d'un nombre d'échantillons $N(P)$ entre $P$ passages à la saturation du signal numérique saturé $\underline{X}_n$ ;
- au cours de l'étape de surveillance, le signal numérique $X'_n$ est écrêté à la valeur seuil $X_s$ pour former un signal numérique saturé $\underline{X}'_n$ et le nombre moyen courant $<N'>$ d'échantillons par élément de référence est déterminé sur la base d'un nombre d'échantillons $N(P)$ entre $P$ passages à la saturation du signal numérique saturé $\underline{X}'_n$.

Dans un mode de mise en oeuvre, l'écrêtage des signaux numériques $X_n$, $X'_n$ générés aux étapes d'apprentissage et de surveillance est réalisé numériquement en post-traitement.

Dans un mode de mise en oeuvre, l'écrêtage des signaux numériques Xn, X'n générés aux étapes d'apprentissage et de surveillance est réalisé par une saturation du capteur.

Dans un mode de mise en oeuvre, l'élément de référence est une maille de la chaîne de transmission mécanique.

Dans un mode de mise en oeuvre, l'étape de surveillance comporte une sous-étape de déclenchement d'au moins une alarme lorsque le pourcentage d'allongement de la chaîne de transmission mécanique dépasse au moins une valeur limite.

Dans un mode de mise en oeuvre, une valeur limite est égale à 3%.

L'invention concerne également un dispositif pour la mise en oeuvre du procédé selon l'invention, lequel dispositif comporte :

- une chaîne de transmission mécanique présentant un brin tendu ;
- un capteur à partir duquel un signal numérique Xn, X'n peut être généré ;

Selon l'invention, le dispositif comporte par ailleurs des moyens de calcul pour :

- déterminer le nombre moyen initial <N> d'échantillons du signal numérique Xn générés au passage d'au moins un élément de référence du brin tendu devant ledit capteur ;
- déterminer le nombre moyen courant <N'> d'échantillons du signal numérique X'n générés au passage d'au moins un élément de référence du brin tendu devant ledit capteur ;
- comparer ledit nombre moyen courant d'échantillons audit nombre moyen initial d'échantillons afin d'en déduire le pourcentage d'allongement ∆L% de la chaîne de transmission.

Dans une forme de réalisation, le dispositif comporte par ailleurs des moyens pour comparer le pourcentage d'allongement ∆L% de la chaîne de transmission à au moins une valeur limite et déclencher au moins une alarme en fonction de la valeur du pourcentage d'allongement de la chaîne.

Dans une forme de réalisation, le capteur est un capteur magnétique.

## BREVE DESCRIPTION DES FIGURES

L'invention sera mieux comprise à la lecture de la description qui suit et à l'examen des figures qui l'accompagnent. Celles-ci ne sont présentées qu'à titre indicatif et nullement limitatif de l'invention.

La figure 1A représente symboliquement une chaîne de transmission mécanique et un capteur contrôlant le brin tendu de la chaîne de transmission.

La figure 1B représente un détail d'un brin de la chaîne de transmission.

La figure 2 représente de manière schématique les différentes étapes du procédé selon l'invention.

La figure 3A représente une évolution au cours du temps du signal numérique généré à partir du capteur.

La figure 3B représente l'évolution au cours du temps du signal numérique de la figure 3A après écrêtage.

La figure 4 représente l'évolution temporelle des enveloppes des signaux numériques générés par le capteur au cours des étapes d'apprentissage et de surveillance, avec cumul progressif des écarts entre mailles du fait de l'allongement de la chaîne.

## DESCRIPTION DETAILLEE

L'invention concerne un procédé 10 de mesure d'un allongement d'une chaîne de transmission mécanique 1 dans lequel un signal fourni par un capteur unique est traité.

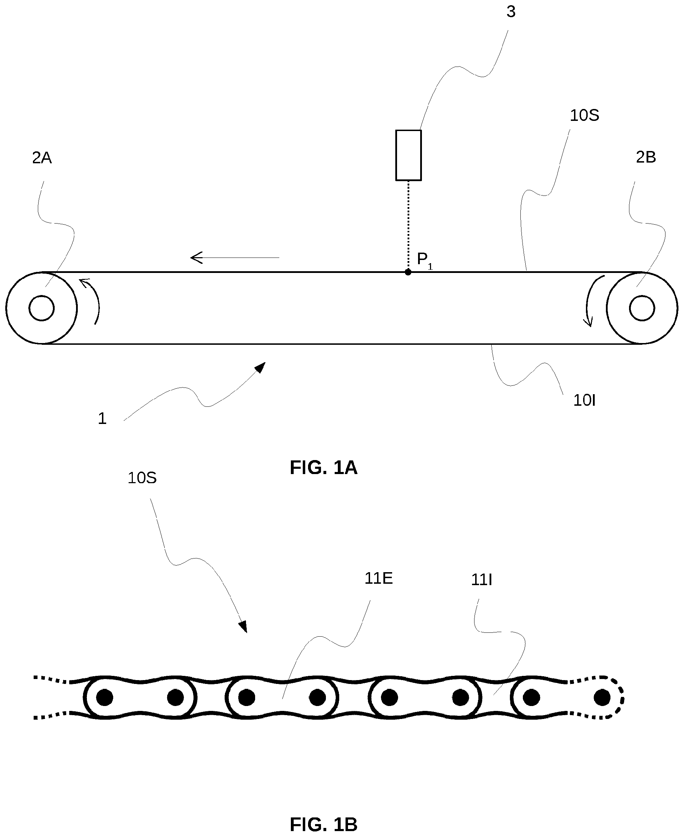

La figure 1A représente une chaîne de transmission mécanique 1 mise en mouvement par des pignons 2A, 2B. Des sens de rotation desdits pignons et de mouvement de ladite chaîne de transmission sont indiqués par des flèches sur la figure 1A. La chaîne de transmission 1 comporte un brin tendu, dans l'exemple illustré le brin supérieur 10S, et un brin de retour, dans l'exemple illustré le brin inférieur 10I, et comporte essentiellement une alternance de mailles internes 11I et de mailles externes 11E, comme illustré sur la figure 1B. La chaîne de transmission 1 présente généralement une maille de jonction non représentée sur les figures.

Bien entendu, les éléments représentés sur la figure 1A ne sont pas nécessairement à l'échelle. Dans un souci de simplification, les mailles 11I, 11E illustrés sur la figure 1B ainsi que les dents des pignons 2A et 2B n'ont pas été représentées sur la figure 1A. Par ailleurs, l'homme du métier comprendra à la lecture de ce qui suit que la taille des pignons 2A, 2B n'a pas d'importance et que les dimensions de l'un desdits pignons peuvent être, et sont généralement, différentes des dimensions de l'autre pignon. De la même manière, divers types de chaînes peuvent être utilisés sans limiter la portée de l'invention, par exemple chaînes à rouleaux ou chaînes à mailles jointives.

Un capteur 3 est placé dans un environnement de la chaîne de transmission 1. Le capteur 3 est placé de telle sorte que ledit capteur détecte un mouvement de la chaîne de transmission 1 en un point P1 fixe du brin supérieur 10S tendu.

La notion de « point » doit se comprendre ici par une portion du brin supérieur 10S de dimension la plus petite possible en fonction de la précision du capteur utilisé. Il doit être compris par « fixe » que ce « point » est immobile dans un référentiel lié à un bâti (non représenté) de la chaîne de transmission 1. Le point P1 n'est donc pas rattaché physiquement à la chaîne de transmission 1 en mouvement par rapport audit bâti, mais il peut par exemple être considéré que ce point est placé à une distance fixe des centres des pignons 2A, 2B. Il convient toutefois de noter que la position du point P1 entre les pignons 2A, 2B est indifférente dans le cadre de la mise en oeuvre du procédé selon l'invention, comme il sera compris par la suite.

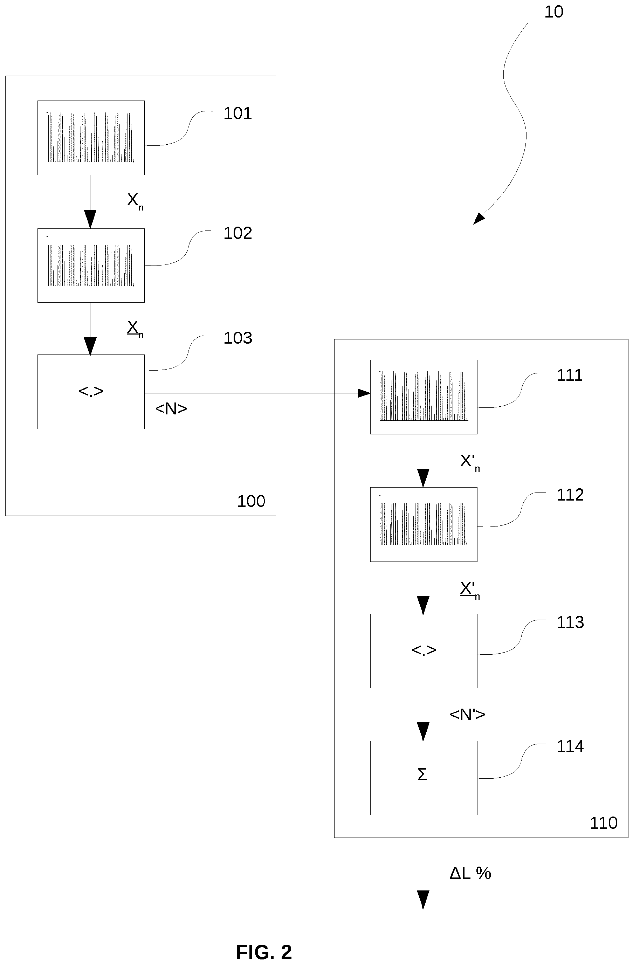

En référence à la figure 2, le procédé 10 selon l'invention comporte deux étapes principales: une étape d'apprentissage 100 et une étape de surveillance 110.

Dans une première sous-étape de mesurage 101 de l'étape d'apprentissage 100, le capteur 3 réalise un mesurage d'une grandeur d'intérêt. La grandeur d'intérêt dépend du type de capteur utilisé.

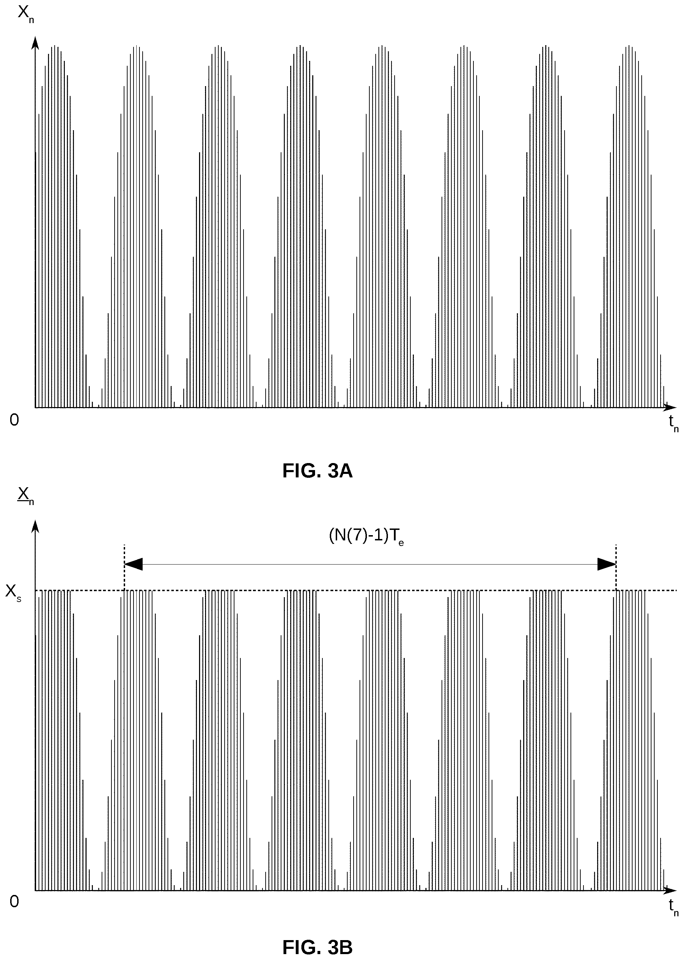

Dans un mode préféré de réalisation illustré sur les figures, le capteur 3 est un capteur magnétique sensible à une quantité de métal située dans un champ de mesure dudit capteur. Le capteur 3 magnétique produit un signal analogique X(t) fonction du temps qui est échantillonné à une fréquence d'échantillonnage Fe et quantifié pour obtenir un signal numérique Xn comme représenté sur la figure 3A. La conversion du signal analogique X(t) au signal numérique Xn est réalisée par un convertisseur analogique/numérique qui peut être intégré au capteur 3.

Sur la figure 3A, un pic d'une enveloppe du signal numérique Xn correspond au passage d'une liaison inter-mailles entre deux mailles successives, ce qui correspond à une quantité de métal maximale passant dans le champ de mesure du capteur magnétique, et un creux de l'enveloppe dudit signal numérique correspond à la partie centrale d'une maille 11I, 11E, c'est-à-dire une quantité minimale d'élément métallique passant devant ledit champ de mesure.

D'autres capteurs peuvent toutefois être mis en oeuvre sans limiter la portée de l'invention, par exemple des capteurs optiques. Dans ce dernier cas, le capteur pourra par exemple détecter la présence ou l'absence de matière ; les courbes résultantes pouvant osciller entre deux valeurs, selon le cas.

L'indice n est ici un indice générique. Classiquement, le signal numérique Xn est défini par la relation :

$$\begin{cases} X_n = X(t_n) \\ t_n = nT_e \end{cases}$$

Où n est un entier et Te une période d'échantillonnage du signal numérique Xn et X(t) est le signal analogique représentant une évolution temporelle de la grandeur d'intérêt, une quantité de métal dans le cas décrit ici.

Il convient de remarquer que, sur la figure, le signal est périodique, mais la forme des lobes de l'enveloppe du signal peut être amenée à varier légèrement d'un lobe à un autre sans toutefois limiter la portée de l'invention. Par exemple, la forme des lobes peut varier légèrement de par la présence de limaille de fer ou d'une autre pollution de la chaîne, ou lors du passage d'une maille de jonction.

Dans une sous-étape ultérieure d'écrêtage 102, le signal numérique Xn est écrêté, de sorte que tous les échantillons dépassant une valeur seuil Xs, ladite valeur seuil étant inférieure à un maximum sur l'ensemble des valeurs prises par le signal numérique Xn, sont ramenés à cette valeur. Il est ainsi obtenu un signal Xn écrêté, comme illustré sur la figure 3B.

Préférentiellement, la valeur seuil Xs est supérieure ou égale à 50% dudit maximum du signal numérique Xn sur les échantillons considérés. Préférentiellement, la valeur seuil Xs est égal à $\sqrt{2}/2$ fois le maximum, soit environ 70% du maximum, ce qui permet de s'affranchir au moins partiellement, au cours du procédé des variations de forme du signal numérique dues à la présence de pollutions sur la chaîne, par exemple de la limaille de fer.

L'écrêtage peut être réalisé numériquement, mais peut aussi être réalisé en même temps que la sous-étape de mesurage 101 par une saturation du capteur 3.

Dans une sous-étape ultérieure de comptage initial 103, il est déterminé un nombre N(P) d'échantillons entre P passages à la saturation du signal écrêté Xn, étant entendu qu'un passage à la saturation est défini ici comme étant le passage du signal Xn d'une valeur strictement inférieure à la valeur seuil Xs de saturation à un échantillon donné à ladite valeur seuil à l'échantillon immédiatement supérieur.

A titre d'exemple, un intervalle temporel comprenant N(7) échantillons et correspondant à sept passages du signal Xn à la saturation est représenté sur la figure 3B.

Le nombre d'échantillons N(P) ainsi déterminé correspond sensiblement au nombre d'échantillons générés par le capteur 3 au passage de P-1 mailles de la chaîne de transmission 1. Un nombre moyen initial <N> d'échantillons par maille est ensuite déterminé. Ce nombre moyen initial est égal au rapport du nombre d'échantillons N(P) entre P passages sur le nombre de passages décomptés P moins un, correspondant au nombre de mailles ayant défilé devant le capteur 3 entre les P passages à la saturation, étant entendu que P est un entier nécessairement supérieur ou égal à deux :

$$<N> = \frac{N(P)}{P-1}$$

Afin de tenir compte des variations possibles de la forme de la courbe au cours du temps, il est considéré préférentiellement un nombre de passages P supérieur à dix et inférieur ou égal au nombre de maillons de la chaîne. De cette manière, l'impact de perturbations telles que la présence de limaille de fer sur la chaîne 1 ou la présence d'une maille de jonction est atténué.

L'homme du métier comprendra à la lecture de ce qui suit que le nombre N(P) d'échantillons peut être défini de manière différente, en redéfinissant par exemple la notion de « passage » comme étant associée à une sortie de la saturation du signal $\underline{X}$n. Cette notion doit toutefois être définie sans ambigüité afin de pouvoir identifier clairement les « passages » de la courbe d'un état à un autre.

A l'issue de cette sous-étape de comptage initial, le nombre moyen <N> d'échantillons par maille est stocké dans un espace mémoire.

Dans la suite de la description, les références des grandeurs mesurées ou déterminées au cours de l'étape de surveillance 110 seront assorties d'une apostrophe, afin de les distinguer des grandeurs mesurées ou déterminées à l'étape précédente d'apprentissage 100.

L'étape de surveillance 110 comporte une première sous-étape de mesure 111, au cours de laquelle sous-étape un signal numérique X'n est généré à partir du capteur 3, de manière similaire à celle décrite précédemment au cours de l'étape d'apprentissage 100.

De la même manière que lors de l'étape d'apprentissage 100, l'étape de surveillance 110 comporte ensuite une sous-étape d'écrêtage 112 au cours de laquelle le signal X'n est écrêté pour obtenir un signal $\underline{X}$'n écrêté.

L'écrêtage peut être réalisé numériquement au cours de cette sous-étape d'écrêtage 112 ou au cours de la sous-étape de mesurage 111 par saturation du capteur 3.

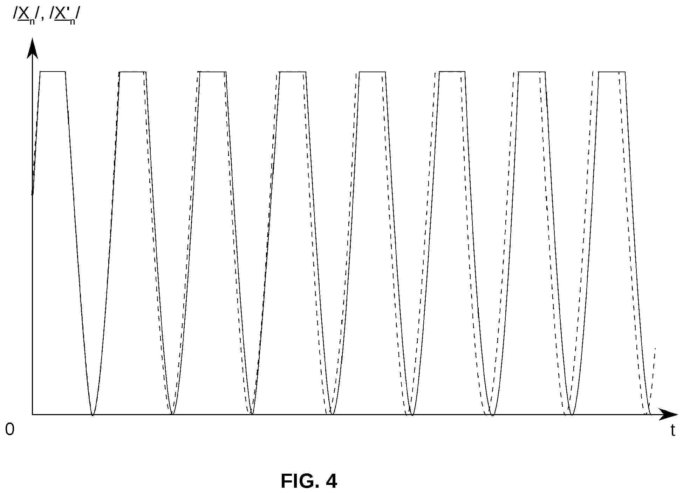

La figure 4 représente une évolution au cours du temps des signaux numériques $\underline{X}$n et $\underline{X}$'n obtenus respectivement au cours de l'étape d'apprentissage 100 et de l'étape de surveillance 110. Par souci de clarté, seules des enveloppes /$\underline{X}$n/, /$\underline{X}$'n/ de ces signaux ont été représentées.

L'enveloppe /$\underline{X}$n/ du signal numérique $\underline{X}$n est représentée en trait interrompu. L'enveloppe /$\underline{X}$'n/ du signal numérique $\underline{X}$'n est représentée en trait plein.

Il peut être constaté qu'un déphasage du signal numérique /$\underline{X}$'n/ par rapport au signal numérique /$\underline{X}$n/ augmente au fur et à mesure du défilement de la chaîne devant le capteur. Ce phénomène est dû au cumul des écarts entre mailles successives dus à la déformation de la chaîne de transmission 1.

Lors d'une sous-étape ultérieure de comptage 113 de l'étape de surveillance 110, le nombre N'(P') d'échantillons entre P' passages à la saturation du signal écrêté $\underline{X}$'n est déterminé, un « passage » étant défini de la même manière qu'à l'étape d'apprentissage 100.

Préférentiellement, le nombre de passages P' considéré lors de l'étape de surveillance 110 est supérieur à dix et inférieur ou égal au nombre de maillons de la chaîne. Un avantage de considérer un nombre important de passages P' est, outre le fait de s'affranchir de pollutions éventuelles de la chaîne comme décrit plus haut pour l'étape d'apprentissage 100, de mettre en évidence l'allongement de la chaîne par cumul des écarts entre mailles successives, et ainsi réaliser une mesure plus précise de l'allongement.

Préférentiellement, le nombre de passages P' considéré est égal au nombre de passages P considéré à l'étape d'apprentissage 100.

Il est ensuite déterminé au cours la sous-étape de comptage 113 le nombre moyen courant <N'> d'échantillons par maille égal au rapport du nombre d'échantillons N'(P') entre P' passages sur le nombre de passages décomptés P' moins un, correspondant au nombre de mailles ayant défilé devant le capteur 3 entre les P' passages à la saturation, étant entendu que P' est un entier nécessairement supérieur ou égal à deux :

$$< N' > = \frac{N'(P')}{P' - 1}$$

Le nombre moyen courant <N'> d'échantillons par maille est ensuite comparé au cours d'une sous-étape de détermination de l'allongement 114, au nombre moyen initial <N> d'échantillons par maille déterminé lors de l'étape d'apprentissage 100, pour en déduire un nombre moyen supplémentaire <ΔN> d'échantillons par maille, du fait de l'allongement :

$$< \Delta N > = < N' > - < N >$$

Un pourcentage d'allongement ΔL%, défini comme un rapport entre un allongement ΔL de la chaîne de transmission 1 à sa longueur L sans allongement, est déterminée comme étant égale au rapport du nombre moyen supplémentaire <ΔN> d'échantillons par maille au nombre moyen initial <N> d'échantillons par maille :

$$\Delta L\% = \frac{< \Delta N >}{< N >}$$

L'homme du métier comprendra qu'il s'agit en fait d'une approximation du pourcentage d'allongement ΔL%, dont la précision dépend en partie de la valeur de la fréquence d'échantillonnage Fe des signaux numériques Xn, X'n. De fait cette relation se rapproche d'autant plus d'une égalité que la fréquence d'échantillonnage Fe est élevée, permettant ainsi d'affiner la détection du passage des signaux numériques $\underline{X}$n, $\underline{X}$'n à la saturation, et donc les calculs menés au cours du procédé selon l'invention.

Egalement, de manière plus générale, les nombres moyens d'échantillons <N>, <N'> considérés dans les étapes d'apprentissage 100 et de surveillance 110 peuvent être des nombres moyens d'échantillons par élément de référence, un élément de référence étant une portion de la chaîne se répétant spatialement de manière sensiblement périodique le long de la chaîne, et permettant d'appliquer le procédé de la même manière que décrit précédemment dans le cas particulier où l'élément de référence est une maille. On entend par « de manière sensiblement périodique » que le passage de l'élément de référence devant le capteur 3 génère un motif dont la forme se répète dans le temps, de manière sensiblement périodique, avec potentiellement de légères variations dues par exemple à la présence de limaille, ou au passage d'une maille de jonction devant le capteur.

Outre une maille, un élément de référence peut par exemple être un rouleau d'une chaîne à rouleaux.

Il convient de noter qu'une vitesse de défilement de la chaîne de transmission 1 doit être la même entre les étapes d'apprentissage 100 et de surveillance 110, mais il n'est toutefois pas nécessaire de connaître sa valeur. La vitesse de défilement correspond à la vitesse de défilement de la chaîne devant le capteur, c'est-à-dire dans son champ de mesure, dans le référentiel du bâti.

Dans un mode préféré de mise en oeuvre du procédé selon l'invention, au moins une alarme est mise en oeuvre pour prévenir un opérateur d'un allongement excessif de la chaîne de transmission 1. A titre d'exemple, il peut être mis en oeuvre trois alarmes se déclenchant pour des pourcentages d'allongement ΔL% de 2%, 2,5% et 3%.

L'étape de surveillance 110 est ainsi répétée à intervalles réguliers, par exemple toutes les trente secondes ou toutes les minutes, afin d'assurer une surveillance de l'allongement de la chaîne de transmission 1 au cours du temps.

Le procédé 10 selon l'invention présente en particulier les avantages suivants :

- il n'est pas nécessaire de connaître le pas de la chaîne, ni aucune de ses caractéristiques mécaniques ou dimensionnelles, ni sa géométrie, en particulier, une pollution de la chaîne de transmission du type présence de limaille de fer sur quelques mailles, n'empêche pas la détermination du pourcentage d'allongement ΔL% ;
- un seul capteur est nécessaire pour la détermination de l'allongement ;
- la position dudit capteur le long du brin tendu de la chaîne de transmission est libre ;
- il n'est pas nécessaire de connaître la vitesse de défilement de la chaîne.

**Revendications**

**1.** Procédé (10) pour la détermination d'un allongement d'une chaîne de transmission mécanique (1) comportant un brin tendu contrôlé par un capteur (3) à partir duquel est généré un signal numérique Xn, X'n, ledit procédé étant **caractérisé en ce qu'**il comporte :

- une étape d'apprentissage (100) au cours de laquelle est déterminé un nombre moyen initial <N> d'échantillons du signal numérique Xn générés à partir du capteur (3) au passage d'un élément de référence du brin tendu devant ledit capteur ;
- une étape ultérieure de surveillance (110) au cours de laquelle est déterminé un nombre moyen courant <N'> d'échantillons du signal numérique X'n générés au passage d'un élément de référence du brin tendu devant ledit capteur, puis comparé au nombre moyen initial <N> déterminé lors de l'étape d'apprentissage (100) afin d'en déduire un pourcentage d'allongement ΔL% de la chaîne de transmission (1) ;

une vitesse de défilement de la chaîne de transmission mécanique (1) devant le capteur (3) étant identique aux étapes d'apprentissage (100) et de surveillance (110).

**2.** Procédé (10) selon la revendication 1 **caractérisé en ce que** :

- au cours de l'étape d'apprentissage (100), le signal numérique Xn est écrêté à une valeur seuil Xs pour former un signal numérique saturé Xn et le nombre moyen initial <N> d'échantillons par élément de référence est déterminé sur la base d'un nombre d'échantillons N(P) entre P passages à la saturation du signal numérique saturé Xn ;
- au cours de l'étape de surveillance (110), le signal numérique X'n est écrêté à la valeur seuil Xs pour former un signal numérique saturé X'n et le nombre moyen courant <N'> d'échantillons par élément de référence est déterminé sur la base d'un nombre d'échantillons N(P) entre P passages à la saturation du signal numérique saturé X'n.

**3.** Procédé (10) selon la revendication 2 **caractérisé en ce que** l'écrêtage des signaux numériques Xn, X'n générés aux étapes d'apprentissage (100) et de surveillance (110) est réalisé numériquement en post-traitement.

**4.** Procédé (10) selon la revendication 2 **caractérisé en ce que** l'écrêtage des signaux numériques Xn, X'n générés aux étapes d'apprentissage (100) et de surveillance (110) est réalisé par une saturation du capteur (3).

**5.** Procédé selon l'une quelconque des revendications précédentes **caractérisé en ce que** l'élément de référence est une maille de la chaîne de transmission mécanique (1).

**6.** Procédé selon l'une quelconque des revendications précédentes **caractérisé en ce que** l'étape de surveillance (110) comporte une sous-étape de déclenchement d'au moins une alarme lorsque le pourcentage d'allongement de la chaîne de transmission mécanique (1) dépasse au moins une valeur limite.

**7.** Procédé selon la revendication 6 **caractérisé en ce qu'**une valeur limite est égale à 3%.

**8.** Dispositif pour la mise en oeuvre du procédé selon l'une quelconque des revendications précédentes, comportant :

    - une chaîne de transmission mécanique (1) présentant un brin tendu ;
    - un capteur (3) à partir duquel un signal numérique $X_n$, $X'_n$ peut être généré ;

ledit dispositif étant **caractérisé en ce qu'**il comporte par ailleurs des moyens de calcul pour :

    - déterminer le nombre moyen initial <N> d'échantillons du signal numérique $X_n$ générés au passage d'au moins un élément de référence du brin tendu devant ledit capteur ;
    - déterminer le nombre moyen courant <N'> d'échantillons du signal numérique $X_n$ générés au passage d'au moins un élément de référence du brin tendu devant ledit capteur ;
    - comparer ledit nombre moyen courant d'échantillons audit nombre moyen initial d'échantillons afin d'en déduire le pourcentage d'allongement $\Delta L\%$ de la chaîne de transmission (1).

**9.** Dispositif selon la revendication 8 **caractérisé en ce qu'**il comporte par ailleurs des moyens pour comparer le pourcentage d'allongement $\Delta L\%$ de la chaîne de transmission (1) à au moins une valeur limite et déclencher au moins une alarme en fonction de la valeur du pourcentage d'allongement de la chaîne.

**10.** Dispositif selon la revendication 8 ou la revendication 9 **caractérisé en ce que** le capteur (3) est un capteur magnétique.

3

10S

2A

2B

P₁

10I

1

**FIG. 1A**

10S

11E

11I

**FIG. 1B**

FIG. 2

FIG. 3A

FIG. 3B

$/\underline{X}_n/$ , $/\underline{X}'_n/$

**FIG. 4**

Europäisches
Patentamt

European
Patent Office

Office européen
des brevets

**RAPPORT DE RECHERCHE EUROPEENNE**

Numéro de la demande

EP 17 20 7949

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>Y | EP 3 196 625 A1 (RENOLD PLC [GB]) 26 juillet 2017 (2017-07-26)<br>* alinéas [0065], [0069], [0071] - [0080]; revendications 1,9,10; figures 1-5 *<br>----- | 1,5,6, 8-10<br>1-10 | INV.<br>G01B21/16<br>G01M13/02<br>F16G13/00<br>G01B5/16<br>G01B7/04<br>G01B11/14 |
| X<br>Y | JP 2000 291748 A (HITACHI BUILDING SYS CO LTD) 20 octobre 2000 (2000-10-20)<br>* alinéas [0025], [0026], [0027], [0028], [0029]; figures 6,7 *<br>----- | 1,8<br>1-10 | |
| X<br>Y | US 2016/010977 A1 (FROST CHARLES C [US] ET AL) 14 janvier 2016 (2016-01-14)<br>* alinéas [0010] - [0013], [0025]; figure 1 *<br>----- | 1,8<br>1-10 | |
| X<br>Y | US 2016/116356 A1 (GOLDSTEIN MICHAEL D [IL]) 28 avril 2016 (2016-04-28)<br>* alinéa [0060]; figures 4a, 4c *<br>----- | 1,8<br>1-10 | |
| | | | **DOMAINES TECHNIQUES RECHERCHES (IPC)**<br>G01B<br>G01M<br>F16G |

Le présent rapport a été établi pour toutes les revendications

| Lieu de la recherche | Date d'achèvement de la recherche | Examinateur |
|---|---|---|
| Munich | 16 avril 2018 | Grand, Jean-Yves |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 17 20 7949

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-04-2018

| Document brevet cité au rapport de recherche | | Date de publication | Membre(s) de la famille de brevet(s) | | Date de publication |
|---|---|---|---|---|---|
| EP 3196625 | A1 | 26-07-2017 | AUCUN | | |
| JP 2000291748 | A | 20-10-2000 | JP | 3570914 B2 | 29-09-2004 |
| | | | JP | 2000291748 A | 20-10-2000 |
| US 2016010977 | A1 | 14-01-2016 | CA | 2954521 A1 | 14-01-2016 |
| | | | EP | 3167267 A2 | 17-05-2017 |
| | | | US | 2016010977 A1 | 14-01-2016 |
| | | | WO | 2016007454 A2 | 14-01-2016 |
| US 2016116356 | A1 | 28-04-2016 | US | 2016116356 A1 | 28-04-2016 |
| | | | WO | 2014199376 A1 | 18-12-2014 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9772179 B
- GB 2377918 A
- US 5563392 A